# DEMANDE DE BREVET EUROPEEN

(11) **EP 2 354 872 A1**
(43) Date de publication de la demande: **10.08.2011**
(21) Numéro de dépôt: 11152406.2
(22) Date de dépôt: 27.01.2011
(51) Int. Cl.: G05B 19/401

(54) **Machine à outil, procédé de mesure par contact d'une dimension d'un outil d'usinage monté dans une broche d'une machine-outil et procédé de compensation mettant en oeuvre ledit procédé de mesure.**

(30) Priorité: 28.01.2010 FR 1000321
(71) Demandeur: Centre Technique de l'Industrie du Décolletage, 74300 Cluses (FR)
(72) Inventeur: Chatain, Richard, 74130, Bonneville (FR)
(74) Mandataire: Sogan, Gloria

(57) **Abrégé**

L'invention concerne une machine-outil comportant un outil d'usinage (15) pour l'usinage d'une pièce à usiner et un dispositif de mesure par contact (1) d'au moins une dimension d'outil d'usinage, caractérisée en ce que ledit dispositif de mesure par contact (1) comprend d'une part, un élément de référence (2) recouvert d'une couche de peinture (4) qui est destinée à être enlevée localement lors d'un impact entre ledit élément de référence (2) et ledit outil d'usinage (15) et d'autre part, un détecteur optique (3) pointant une zone d'impact (5) entre ledit outil d'usinage (15) et ledit élément de référence (2), pour détecter une trace issue de l'enlèvement local de ladite couche de peinture (4).

L'invention concerne également un procédé de mesure par contact d'au moins une dimension d'un outil d'usinage monté dans une broche d'une telle machine-outil et un procédé de compensation mettant en oeuvre ledit procédé de mesure.

## Description

La présente invention concerne une machine-outil, telle qu'un centre d'usinage ou un tour, et un procédé de mesure par contact d'au moins une dimension d'un outil d'usinage monté dans une broche d'une machine-outil, pour une mesure haute précision en ligne de caractéristiques dimensionnelles de l'outil d'usinage. L'invention concerne également un procédé de compensation mettant en oeuvre ledit procédé de mesure.

Certaines applications spécifiques, telles que des applications industrielles ou expérimentales, nécessitent le développement de procédés mécaniques de très haute précision. Les domaines concernés sont par exemple la recherche, l'aéronautique, l'aérospatial, l'horlogerie ou encore la fabrication de moules pour la micro-injection. Pour ces applications, la précision d'usinage exigée est de plus en plus élevée. On cherche aujourd'hui à garantir des précisions d'usinage de l'ordre de +/-2,5µm.

L'usinage haute précision requiert la connaissance des caractéristiques dimensionnelles, telles que la longueur ou le diamètre des outils d'usinage, avant même de commencer le processus d'usinage, de manière à déterminer avec précision notamment le déplacement de l'outil à la surface de la pièce. La précision demandée au niveau de la mesure des caractéristiques dimensionnelles de l'outil d'usinage est alors inférieure à +/-5µm, par exemple de l'ordre de +/-0,5µm.

Pour mesurer l'outil, on connaît des détecteurs à contact permettant de palper l'outil directement dans la broche de la machine-outil pour en déduire une dimension. Ces détecteurs permettent d'atteindre des précisions de mesure de l'ordre de +/-0,2µm. Toutefois, ils ne permettent pas la mesure d'outil en rotation dans la machine avec des conditions d'utilisation identiques à celles de l'usinage. En effet, à grande vitesse, l'échauffement de la broche entraîne sa dilatation, de l'ordre de 15µm d'allongement pour une vitesse de rotation de la broche de l'ordre de 40 000 tr/min. Cette dilatation de la broche impacte la précision de la mesure. En outre, la mesure statique ne tient pas compte du balourd de l'outil en rotation. Les précisions alors obtenues sortent des tolérances d'usinage.

On connaît également des détecteurs optiques sans contact permettant la mesure d'outils en rotation.

Le fonctionnement de certains détecteurs optiques sans contact est basé sur la technologie laser. Le franchissement d'un faisceau laser par l'outil est détecté par un capteur optique, ce qui permet d'en déduire des dimensions de l'outil. Toutefois, les diamètres des faisceaux lasers disponibles ne permettent pas d'obtenir une précision de mesure inférieure à +/-5µm. En outre, ces détecteurs optiques ne sont pas appropriés pour la mesure d'outils diamant pour lesquels les propriétés optiques des arêtes peuvent interférer avec le faisceau laser et ne pas être parfaitement bien détectées.

D'autres détecteurs optiques sans contact utilisent une caméra pouvant grossir et mesurer les dimensions de l'outil. La précision de mesure obtenue est alors limitée par la taille des pixels des caméras utilisées. Les meilleures résolutions actuellement disponibles, de l'ordre de 0,7µm, ne sont pas suffisantes pour atteindre les objectifs précités. En outre, et comme pour les raisons évoquées précédemment, ce type de détecteur n'est pas adapté pour la mesure d'outils diamant.

L'invention a donc notamment pour but de pallier à ces inconvénients en proposant une machine à outil, un procédé et un dispositif de mesure par contact, présentant une haute précision de mesure, par exemple meilleure que +/-5µm, pour la mesure d'outils en ligne, c'est-à-dire en rotation dans des conditions proches de celles de l'usinage, et fonctionnant avec n'importe quel type d'outils, notamment des outils diamant.

A cet effet, l'invention a pour objet une machine-outil comportant un outil d'usinage pour l'usinage d'une pièce à usiner et un dispositif de mesure par contact d'au moins une dimension d'outil d'usinage, caractérisée en ce que ledit dispositif de mesure par contact comprend d'une part, un élément de référence recouvert d'une couche de peinture qui est destinée à être enlevée localement lors d'un impact entre ledit élément de référence et ledit outil d'usinage et d'autre part, un détecteur optique pointant une zone d'impact entre ledit outil d'usinage et ledit élément de référence, pour détecter une trace issue de l'enlèvement local de ladite couche de peinture.

L'outil d'usinage se déplace pas à pas en direction de l'élément de référence dans la zone d'impact, jusqu'à impacter la couche de peinture, formant une trace. Cette trace est détectée par le détecteur optique, ce qui permet de positionner spatialement l'arête de l'outil pour en déduire une de ses caractéristiques dimensionnelles.

La précision de la mesure découle de la précision d'usinage de la forme de l'élément de référence, du pas de déplacement de l'outil d'usinage et de la précision de déplacement de l'outil d'usinage.

Après avoir réalisé une mesure, on décale la zone d'impact en décalant la visée du détecteur optique et la direction de déplacement de l'outil. On peut également changer d'élément de référence, notamment après un grand nombre de décalages de la zone d'impact, la couche de peinture ayant subi plusieurs ablations.

On peut utiliser des outils diamants car la mesure optique n'est pas directement dirigée vers l'outil. En outre, la mesure est réalisée alors que la broche est en fonctionnement. On s'affranchit ainsi des erreurs de précision de mesure induites par la dilation de la broche en rotation. De plus, la vitesse de rotation de la broche n'est pas limitée.

La couche de peinture ne fait que quelques dixièmes de microns d'épaisseur. Elle peut comporter du Bleu de Prusse ou une encre. Par exemple, la couche de peinture comporte une encre noire de feutre. La couche de peinture est ainsi très facile à déposer sur l'élément de référence.

On choisit de préférence une couche de peinture présentant une couleur contrastant avec la couleur de la surface de l'élément de référence. En effet, plus le contraste est fort entre la couche de peinture et l'élément de référence et plus il est facile et rapide de détecter l'élément de référence sous la couche de peinture.

La forme de l'élément de référence peut présenter une précision d'usinage inférieure à +/-2 µm, de préférence inférieure ou égale à +/-0,15µm, ce qui permet d'obtenir une mesure de très haute précision.

On prévoit par exemple une cale étalon parallélépipédique ou une pige de référence cylindrique présentant une cylindricité et un diamètre de +/-0,15µm. La forme cylindrique permet d'obtenir facilement et donc à moindre coût, de très bonnes précisions d'usinage.

Par exemple, l'élément de référence est en acier ou en céramique. Il est possible d'obtenir d'aussi bonnes précisions d'usinage sur la céramique que sur l'acier. Dans le cas d'un élément de référence en acier, on peut prévoir de faire briller la surface usinée de manière à augmenter le contraste entre la couche de peinture et la surface de l'élément de référence. Dans le cas d'un élément de référence en céramique, on peut prévoir une céramique blanche.

Selon un mode de réalisation, le dispositif de mesure comporte un support sur lequel l'élément de référence est fixé, le support présentant des moyens de fixation pour fixer l'élément de référence sur une table de la machine-outil. L'élément de référence est par exemple fixé par collage sur le support, ce qui permet de limiter les contraintes sur l'élément de référence et donc de conserver sa précision d'usinage.

Le support présente par exemple une encoche de soutien de forme complémentaire à l'élément de référence. On limite ainsi également les contraintes sur l'élément de référence.

Le support peut également comporter une cavité interne telle que oblongue et/ou traversante. On réduit ainsi le volume de matériau dans le support, ce qui permet de s'affranchir au moins partiellement des effets de dilatation thermique pouvant survenir dans le support, induisant de nouvelles contraintes sur l'élément de référence.

Avec un pas de déplacement de l'outil d'usinage inférieur à 1 µm, de préférence de l'ordre de 0,2µm et un outil d'usinage de 2 à 6 mm de diamètre, la trace laissée par l'outil d'usinage sur la couche de peinture présente une dimension de l'ordre de 0,05 mm. Pour détecter cette trace, le détecteur optique peut comporter un microscope présentant des moyens de grossissement d'au moins x50.

Selon un autre mode de réalisation, le détecteur optique présente une résolution inférieure à 0,05 mm.

En outre, le détecteur optique peut être numérique, et peut donc être connecté à une unité de traitement de la machine-outil ou une unité de traitement déportée, pour automatiser la détection de la trace sur la couche de peinture, via un algorithme de traitement d'image.

On peut également prévoir que le détecteur optique présente un système d'éclairage autour de son objectif pour mieux visualiser la zone d'impact et/ou un capot de protection autour de son objectif pour protéger l'objectif d'éventuelles projections.

Selon un mode de réalisation, le dispositif de mesure comporte un bras de support articulé à l'extrémité duquel est fixé le détecteur optique, le bras de support articulé étant apte à pivoter autour de l'élément de référence. Le détecteur optique peut ainsi suivre la zone d'impact entre l'outil d'usinage et l'élément de référence sur une partie de la périphérie de l'élément de référence.

On peut également prévoir que le bras de support articulé soit monté dans un chariot du dispositif de mesure, le chariot étant apte à se déplacer le long de l'élément de référence. Le détecteur optique et la direction de déplacement de l'outil peuvent ainsi être décalés, de manière à décaler la zone d'impact le long de l'élément de référence après qu'il ait localement été mis à nu.

Le bras de support articulé et/ou le chariot peuvent comporter des moyens motorisés de déplacement pilotables par une unité de traitement de la machine-outil ou une unité de traitement déportée, pour automatiser la mesure.

Alternativement, le détecteur optique est monté dans un support de broche de la machine-outil. Ainsi, après chaque pas de déplacement de l'outil d'usinage, le support de broche effectue en un seul mouvement, le dégagement de la broche entraînant l'outil d'usinage et l'approche du détecteur optique vers la zone d'impact. On profite ainsi des moyens de déplacement motorisés de la machine-outil pour déplacer le détecteur optique à proximité de l'élément de référence (non représenté).

La machine-outil peut en outre comporter un mesureur supplémentaire, pour déterminer un premier pourtour grossier de l'outil d'usinage, lorsqu'une mesure de haute précision n'est pas requise ou avant de réaliser une mesure de haute précision pour pré-positionner l'outil d'usinage et ainsi réduire le temps d'approche de l'outil vers la zone d'impact. Le mesureur est un mesureur classique tel qu'un palpeur permettant de réaliser une mesure statique de l'outil ou un détecteur optique sans contact permettant la mesure d'outils en rotation, basé sur la technologie laser ou utilisant une caméra pouvant grossir et mesurer les dimensions de l'outil.

L'invention a aussi pour objet un dispositif de mesure par contact d'au moins une dimension d'outil d'usinage pour machine-outil caractérisé en ce qu'il comporte d'une part, un élément de référence destiné à être fixé sur une machine-outil, ledit élément de référence étant recouvert d'une couche de peinture qui est destinée à être enlevée localement lors d'un impact entre ledit élément de référence et ledit outil d'usinage et d'autre part, un détecteur optique pointant une zone d'impact entre ledit outil d'usinage et ledit élément de référence, pour détecter une trace issue de l'enlèvement local de ladite couche de peinture.

L'invention a aussi pour objet un procédé de mesure par contact d'au moins une dimension d'un outil d'usinage monté dans une broche d'une machine-outil telle que décrite précédemment, caractérisé en ce que :
- ledit détecteur optique vise ladite couche de peinture dans une zone d'impact entre ledit outil d'usinage et ledit élément de référence,
- on incrémente le déplacement dudit outil d'usinage pas à pas en direction dudit élément de référence dans ladite zone d'impact,
- après la progression de chaque pas, on dégage ledit outil d'usinage et on observe ladite couche de peinture, une mesure dimensionnelle dudit outil d'usinage étant déduite du nombre de pas parcourus par ledit outil d'usinage lorsqu'une trace issue de l'enlèvement local de ladite couche de peinture est détectée par ledit détecteur optique.

Le pas de déplacement de l'outil d'usinage est par exemple inférieur ou égal à 1 µm, de préférence 0,2µm.

On peut mesurer une dimension dudit outil d'usinage par un mesureur de ladite machine-outil pour pré-positionner ledit outil d'usinage. Le pré-positionnement de l'outil d'usinage par le mesureur supplémentaire permet de gagner du temps, ce qui est particulièrement souhaitable dans le cas de pas de déplacement inférieurs à 1µm.

On peut diriger l'outil d'usinage verticalement vers le sommet d'un élément de référence, pour déterminer la longueur de l'outil d'usinage. On obtient alors une mesure relative de la longueur de l'outil d'usinage par rapport aux autres outils de la machine-outil.

On peut diriger tour à tour l'outil d'usinage horizontalement vers les deux flancs d'un élément de référence, pour déterminer le diamètre de l'outil d'usinage, le détecteur optique pivotant autour de l'élément de référence pour suivre la zone d'impact entre l'outil d'usinage et l'élément de référence. On obtient alors une mesure absolue du diamètre de l'outil d'usinage.

A partir d'une pige de référence cylindrique ou sphérique, on peut diriger l'outil d'usinage normalement à la circonférence de l'élément de référence séquentiellement selon un angle d'incrémentation, pour déterminer un profil partiel de l'outil d'usinage, le détecteur optique pivotant autour d'un axe longitudinal de la pige de référence pour suivre la zone d'impact entre l'outil d'usinage et la pige de référence. On obtient alors une mesure absolue du profil de l'outil d'usinage. La pige de référence cylindrique est préférée car plusieurs zones d'impact peuvent être disponibles sur une même génératrice du cylindre, par décalage du point de mire du détecteur optique.

Pour réaliser une mesure dimensionnelle d'un autre outil d'usinage monté dans la broche de la machine-outil, on peut déplacer le dispositif optique le long de l'élément de référence de manière à décaler la zone d'impact entre l'outil d'usinage et l'élément de référence.

L'invention a encore pour objet un procédé de compensation mettant en oeuvre le procédé de mesure tel que décrit précédemment, caractérisé en ce qu'après avoir déterminé ledit profil partiel d'outil d'usinage, on détermine un contour continu d'outil d'usinage correspondant, par un calcul d'extrapolation et on utilise ledit contour continu extrapolé pour corriger le déplacement de l'outil d'usinage.

Le contour continu extrapolé de l'outil d'usinage permet d'évaluer le profil d'outil entre les points déterminés à chaque angle d'incrémentation. Le contour continu extrapolé de l'outil permet alors d'approximer le profil réel de l'outil en trois dimensions. Le contour continu extrapolé de l'outil d'usinage est alors utilisé, au lieu des dimensions nominales théoriques, pour corriger le déplacement de l'outil.

D'autres avantages et caractéristiques apparaîtront à la lecture de la description de l'invention donnée à titre d'exemple ainsi que des dessins annexés sur lesquels :
- la figure 1 est une vue schématique d'un exemple de réalisation d'un dispositif de mesure par contact,
- la figure 2 représente un organigramme d'un procédé de mesure par contact d'au moins une dimension d'un outil d'usinage monté dans une broche d'une machine-outil,
- la figure 3a représente une vue de côté d'un outil d'usinage approchant une pige de référence,
- la figure 3b est une vue analogue à la figure 3a dans laquelle l'outil d'usinage est en contact avec la pige de référence,
- la figure 3c est une vue analogue à la figure 3b, sur laquelle on a représenté un dispositif optique, l'outil d'usinage ayant dégagé de la pige de référence,
- la figure 4a représente un vue agrandie d'une pige de référence partiellement recouverte d'une couche de peinture,
- la figure 4b représente une vue analogue à la figure 4a dans laquelle la pige de référence présente une trace issue de l'enlèvement local de la couche de peinture par l'outil d'usinage,
- la figure 5 est une vue analogue à la figure 3b dans laquelle on a représenté deux positions successives de contact de l'outil d'usinage avec une pige de référence pour déterminer le diamètre de l'outil d'usinage,
- la figure 6 est une vue analogue à la figure 5 dans laquelle on a représenté trois positions successives de contact de l'outil d'usinage avec une pige de référence pour déterminer un profil partiel de l'outil d'usinage,
- la figure 7 représente un organigramme d'un procédé de compensation mettant en oeuvre ledit procédé de mesure, et
- la figure 8 représente un graphique d'une courbe de défauts d'un profil partiel mesuré sur 90° d'un outil d'usinage par rapport au profil théorique et d'une courbe de défauts d'un contour continu extrapolé correspondant.

Sur ces figures, les éléments identiques portent les mêmes numéros de référence. Pour plus de clarté, la numérotation des étapes du procédé de mesure commencent à partir de 100 et la numérotation des étapes du procédé de compensation commencent à partir de 200.

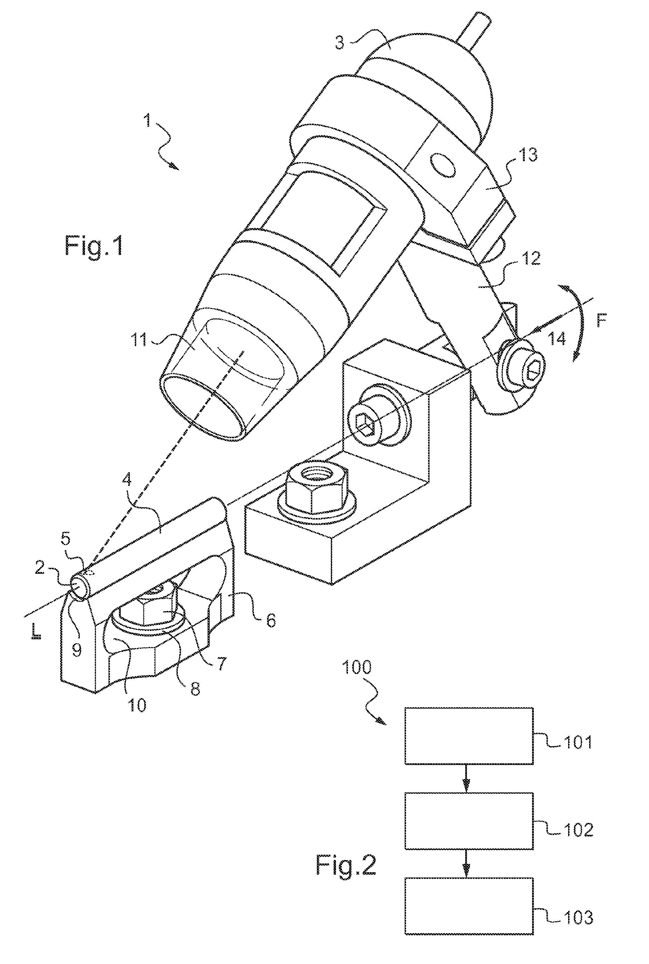

La figure 1 représente une vue schématique d'un exemple de réalisation d'un dispositif de mesure par contact 1 d'au moins une dimension d'outil d'usinage d'une machine-outil.

La machine-outil, telle qu'un centre d'usinage ou un tour présentant des fonctions de fraisage, comporte un outil d'usinage et une table sur laquelle une pièce à usiner est destinée à être usinée à haute précision par l'outil d'usinage (non représenté).

L'outil d'usinage est par exemple en acier ou en diamant, selon la nature du matériau de la pièce à usiner. Il présente un profil adapté à la pièce à usiner. On utilise par exemple une fraise hémisphérique pour l'usinage de pièces à usiner de forme gauches. L'outil d'usinage est monté dans une broche de la machine-outil pour réaliser une mesure en fonctionnement, c'est-à-dire avec la broche en rotation.

Le dispositif de mesure 1 comprend un élément de référence 2 et un détecteur optique 3.

La forme de l'élément de référence 2 présente par exemple une précision d'usinage au moins égale ou inférieure à +/-2µm, de préférence +/-0,15µm, ce qui permet d'obtenir une mesure de très haute précision.

Dans l'exemple représenté sur les figures, l'élément de référence 2 est une pige cylindrique, ce qui permet d'obtenir facilement et donc à moindre coût, de telles précisions d'usinage. Selon d'autres modes de réalisation non représentés, l'élément de référence présente différentes formes, telles que cubique ou sphérique. Dans la suite du texte, on décrira le mode de réalisation d'une pige de référence cylindrique.

La pige de référence 2 est recouverte d'une couche de peinture 4 destinée à être enlevée localement lors d'un impact entre la pige de référence 2 et l'outil d'usinage, mettant la pige de référence 2 à nu, formant une trace dans la couche de peinture 4.

La couche de peinture 4 présente par exemple une épaisseur de 0,2µm. Elle peut comporter du Bleu de Prusse ou une encre. Par exemple, la couche de peinture 4 comporte une encre noire de feutre. La couche de peinture 4 est ainsi très facile à déposer sur la pige de référence 2.

On choisit de préférence une couche de peinture 4 présentant une couleur contrastant avec la couleur de la surface de la pige de référence 2. En effet, plus le contraste est fort entre la couche de peinture 4 et la pige de référence 2 et plus il est facile et rapide de détecter l'apparition de la pige de référence 2 sous la couche de peinture 4.

La pige de référence 2 est par exemple en acier ou en céramique. Il est possible d'obtenir d'aussi bonnes précisions d'usinage sur la céramique que sur l'acier. Dans le cas d'une pige de référence 2 en acier, on peut prévoir une surface usinée brillante de manière à augmenter le contraste entre la couche de peinture 4 et la surface de la pige de référence 2, afin de faciliter la détection de l'ablation de la couche de peinture 4 par l'outil d'usinage.

Dans le cas d'une pige de référence 2 en céramique, on prévoit par exemple une céramique blanche, pour augmenter le contraste entre la couche de peinture 4 et la surface de la pige de référence 2.

La pige de référence 2 est fixe en position, par exemple fixée sur la table.

Le détecteur optique 3 pointe une zone d'impact 5 entre l'outil d'usinage et la pige de référence 2.

L'outil d'usinage se déplace pas à pas en direction de l'élément de référence 2 dans la zone d'impact 5, jusqu'à impacter la couche de peinture 4, formant une trace. Cette trace est détectée par le détecteur optique 3, ce qui permet de positionner spatialement l'arête de l'outil pour en déduire une de ses caractéristiques dimensionnelles.

La précision de la mesure découle de la précision d'usinage de la forme de l'élément de référence, du pas de déplacement de l'outil d'usinage et de la précision de déplacement de l'outil d'usinage.

Après avoir réalisé une mesure, on décale la zone d'impact 5 en décalant la visée du détecteur optique 3 et la direction de déplacement de l'outil. On peut également changer la pige de référence 2, notamment après un grand nombre de décalages de la zone d'impact 5, la couche de peinture 4 ayant subi plusieurs ablations.

On peut utiliser des outils diamants car la mesure optique n'est pas directement dirigée vers l'outil. En outre, la mesure est réalisée alors que la broche est en fonctionnement. On s'affranchit ainsi des erreurs de précision de mesure induites par la dilation de la broche en rotation. De plus, la vitesse de rotation de la broche n'est pas limitée.

Comme visible sur la figure 1, le dispositif de mesure 1 peut comporter un support 6 sur lequel la pige de référence 2 est fixée.

Le support 6 présente des moyens de fixation pour fixer la pige de référence 2 sur la table. Les moyens de fixation comportent par exemple une tige filetée, un écrou 7 et une rondelle 8, la table et le support 6 comportant un trou lisse correspondant (non visibles). Les moyens de fixation permettent d'orienter l'axe longitudinal L de la pige de référence 2 sensiblement parallèlement à un axe de déplacement de la machine-outil.

La pige de référence 2 est par exemple fixée par collage sur le support 6, ce qui permet de limiter les contraintes sur la pige de référence 2 et donc de conserver la précision d'usinage obtenue.

Le support 6 présente par exemple une encoche de soutien de forme complémentaire à la pige de référence 2. Ainsi, dans l'exemple de la figure 1, on distingue que le support 6 présente une encoche de soutien longitudinale en partie cylindrique 9 de forme complémentaire à la pige de référence 2. On limite ainsi également les contraintes sur la pige de référence 2.

En outre, le support 6 peut présenter une cavité interne 10 limitant le volume de matériau dans le support 6, pour s'affranchir au moins partiellement des effets de dilatation thermique qui peuvent survenir sur le support 6 et qui induiraient de nouvelles contraintes sur la pige de référence 2. Par exemple et comme visible sur la figure 1, la cavité interne 10 est oblongue et traversante.

Avec un pas de déplacement de l'outil d'usinage de l'ordre de 0,2µm et un outil d'usinage de 2 à 6 mm de diamètre, la trace laissée par l'outil d'usinage sur la couche de peinture 4 présente une dimension de l'ordre de 0,05 mm. Selon le mode de réalisation représenté sur les figures, le détecteur optique 3 comporte un microscope présentant des moyens de grossissement d'au moins x50, ce qui permet de grossir la trace pour mieux la détecter.

Selon un deuxième mode de réalisation non représenté, le détecteur optique présente une résolution inférieure à 0,05 mm.

En outre, le détecteur optique 3 peut être numérique. Il peut alors être connecté à une unité de traitement de la machine-outil ou une unité de traitement déportée, permettant d'automatiser la détection de la trace de la couche de peinture 4 via un algorithme de traitement d'images.

On peut également prévoir que le détecteur optique 3 présente un système d'éclairage autour de son objectif pour mieux visualiser la zone d'impact. Par exemple, le système d'éclairage comporte une pluralité de diodes d'éclairage disposées en périphérie de l'objectif (non visibles sur les figures).

Le détecteur optique 3 peut également comporter un capot de protection 11 autour de son objectif pour protéger l'objectif d'éventuelles projections. Le capot de protection 11 présente par exemple la forme d'un prolongement tubulaire, se rétrécissant vers le point de visé. Le capot 11 est par exemple en plastique.

Selon un mode de réalisation, le dispositif de mesure 1 comporte en outre un bras de support articulé 12 à l'extrémité 13 duquel est fixé le détecteur optique 3. Par exemple, l'extrémité 13 du bras de support articulé 12 comporte une pince pour prendre ledit détecteur optique 3 en étau. Le bras de support articulé 12 présente une articulation 14 lui permettant de pivoter autour de l'axe longitudinal L de la pige de référence 2, comme l'indique la flèche F. Le détecteur optique 3 peut ainsi suivre la zone d'impact 5 entre l'outil d'usinage et la pige de référence 2 sur une partie de la circonférence de la pige de référence 2.

On peut également prévoir que le bras de support articulé 12 soit monté dans un chariot du dispositif de mesure (non représenté), le chariot étant apte à se déplacer le long de l'axe longitudinal L de la pige de référence 2. Le détecteur optique 3 et la direction de déplacement de l'outil peuvent ainsi être décalés de manière à décaler la zone d'impact 5 le long de la pige de référence 2 après qu'elle ait été localement mise à nu.

En outre, le bras de support articulé 12 et/ou le chariot peuvent comporter des moyens motorisés de déplacement pilotables par une unité de traitement de la machine-outil ou une unité de traitement déportée, pour automatiser la mesure (non représentés).

Alternativement, le détecteur optique 3 est monté dans un support de broche de la machine-outil. Ainsi, après chaque pas de déplacement de l'outil d'usinage, le support de broche effectue en un seul mouvement, le dégagement de la broche entraînant l'outil d'usinage et l'approche du détecteur optique 3 vers la zone d'impact 5. On profite ainsi des moyens de déplacement motorisés de la machine-outil pour déplacer le détecteur optique 3, notamment autour et/ou le long de l'axe longitudinal L de la pige de référence 2 (non représenté).

La machine-outil peut en outre comporter un mesureur supplémentaire (non représenté), pour déterminer un pourtour grossier de l'outil d'usinage, lorsqu'une mesure de haute précision n'est pas requise ou avant de réaliser une mesure de haute précision pour pré-positionner l'outil d'usinage.

Le mesureur est par exemple un palpeur permettant de réaliser une mesure statique de l'outil ou un détecteur optique sans contact permettant la mesure d'outils en rotation, basé sur la technologie laser ou utilisant une caméra pouvant grossir et mesurer les dimensions de l'outil.

La figure 2 représente les différentes étapes de mise en oeuvre d'un procédé de mesure par contact 100 d'au moins une dimension d'un outil d'usinage monté dans une broche d'une machine-outil telle que décrite précédemment.

Dans une première étape 101 du procédé de mesure 100, le détecteur optique 3 vise la pige de référence 2 dans la zone d'impact 5 entre l'outil d'usinage et la pige de référence 2.

Dans le cas où la machine-outil comporte un mesureur supplémentaire, on peut mesurer une dimension de l'outil d'usinage par le mesureur supplémentaire pour pré-positionner l'outil. On prévoit par exemple de pré-positionner l'outil d'usinage à une centaine de pas de déplacement de l'outil. Le pré-positionnement de l'outil d'usinage par le mesureur supplémentaire permet de réduire le temps d'approche de l'outil vers la zone d'impact 5, ce qui est particulièrement souhaitable dans le cas de pas de déplacement inférieurs à 1 µm.

Dans une deuxième étape 102, on incrémente le déplacement de l'outil d'usinage pas à pas en direction de la pige de référence 2 dans la zone d'impact 5.

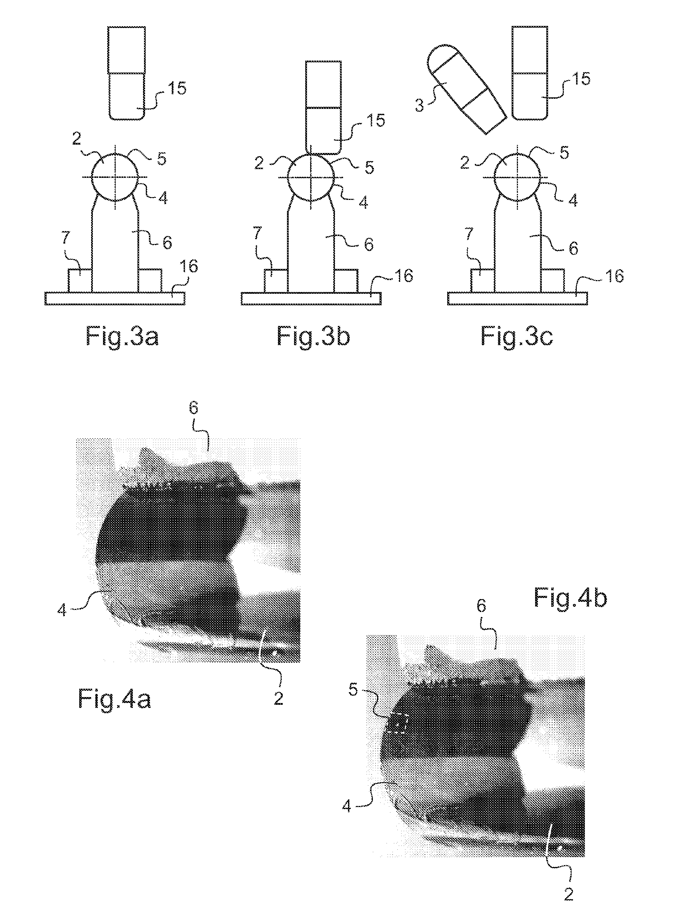

La figure 3a représente ainsi un exemple dans lequel l'outil d'usinage 15 approche une pige de référence 2 montée sur une table 16 de machine-outil.

Sur la figure 3b, l'outil d'usinage 15 vient en contact avec la pige de référence 2.

Après la progression de chaque pas, on dégage l'outil d'usinage 15, par exemple de 15 mm de la zone d'impact 5, et on observe la couche de peinture 4 avec le détecteur optique 3.

La figure 3c représente un outil d'usinage 15 ayant dégagé de la pige de référence 2, laissant la zone d'impact 5 dans la ligne de mire du détecteur optique 3.

La figure 4a représente une pige de référence 2 partiellement recouverte d'une couche de peinture 4. On distingue sur cette figure que la partie gauche de la pige de référence 2 présente une couche de peinture 4 à l'encre noire n'ayant pas encore été mise en contact avec l'outil d'usinage 15. La partie droite de la pige de référence 2 présente une surface nue d'acier brillant.

La figure 4b représente une vue analogue à la figure 4a dans laquelle la couche de peinture 4 a été enlevée localement par l'outil d'usinage 15 entré en contact avec elle, formant une trace dans la zone d'impact 5. Une mesure dimensionnelle de l'outil d'usinage peut alors être déduite du nombre de pas parcourus par l'outil d'usinage.

Comme représenté sur les figures 3a à 3c, on peut diriger l'outil d'usinage 15 verticalement vers le sommet de la pige de référence 2, pour déterminer la longueur de l'outil d'usinage 15. On obtient alors une mesure relative de la longueur de l'outil d'usinage par rapport aux autres outils de la machine-outil.

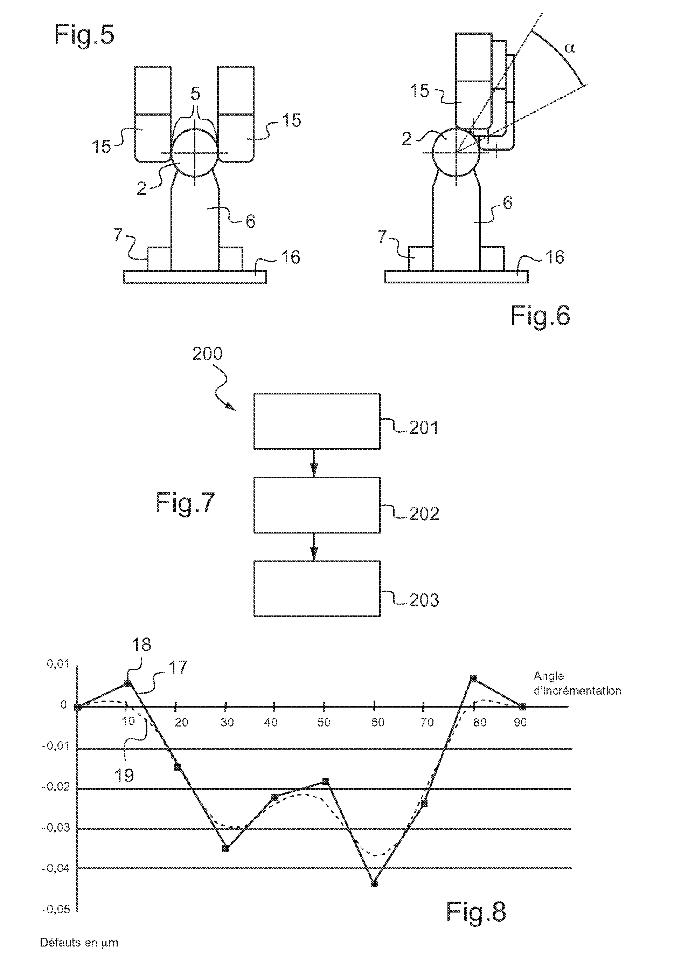

Comme représenté sur la figure 5, on peut diriger tour à tour l'outil d'usinage 15 horizontalement vers les deux flancs de la pige de référence 2, à hauteur du centre de la pige de référence 2, pour déterminer le diamètre de l'outil d'usinage 15. Dans ce cas, le détecteur optique 3 pivote autour de l'axe longitudinal L de la pige de référence 2 pour suivre la zone d'impact 5. On obtient alors une mesure absolue du diamètre de l'outil d'usinage.

Comme représenté sur la figure 6, on peut diriger l'outil d'usinage 15 normalement à la circonférence de la pige de référence 2 séquentiellement selon un angle α d'incrémentation, par exemple de l'ordre de 10°, pour déterminer un profil partiel de l'outil d'usinage 15. Le détecteur optique 3 pivote alors autour de l'axe longitudinal L de la pige de référence 2 pour suivre la zone d'impact 5. On obtient une mesure absolue du profil de l'outil d'usinage.

La figure 8 représente un graphique sur lequel on a représenté une courbe 17 des défauts en µm d'un profil partiel d'un outil hémisphérique par rapport au profil d'outil théorique, sur 90°. La détermination du profil n'est utile que sur 90° du fait de la mesure en rotation de l'outil d'usinage. Une mesure de l'outil est réalisée par angles d'incrémentation, par exemple par angles d'incrémentation de 10°.

Pour réaliser une mesure dimensionnelle d'un autre outil d'usinage monté dans la même broche de la machine-outil, on peut déplacer le dispositif optique 3 le long de l'axe longitudinal de la pige de référence 2 de manière à décaler la zone d'impact 5 entre l'outil d'usinage et la pige de référence (non représenté).

La figure 7 représente un procédé de compensation 200 mettant en oeuvre le procédé de mesure 100 tel que décrit précédemment. Dans le procédé de compensation 200, on détermine dans une première étape 201, un profil partiel d'outil d'usinage en mettant en oeuvre le procédé de mesure 100.

Puis, dans une deuxième étape 202, on détermine un contour continu d'outil d'usinage correspondant par un calcul d'extrapolation. Le contour continu extrapolé de l'outil d'usinage permet d'évaluer le profil d'outil entre les points 18 déterminés à chaque angle d'incrémentation du profil partiel. On a représenté en pointillés sur la figure 8, une courbe 19 des défauts extrapolés d'un contour continu de l'outil hémisphérique dont on avait déterminé la courbe 17 des défauts du profil partiel tout les 10°.

Le contour continu extrapolé de l'outil d'usinage permet alors d'approximer le profil réel de l'outil en trois dimensions.

On utilise ensuite le contour continu extrapolé, au lieu des dimensions nominales théoriques, pour corriger le déplacement de l'outil d'usinage dans la machine-outil (étape 203).

Avec un élément de référence présentant une précision d'usinage au moins égale ou inférieure à 2 µm, de préférence +/-0,15µm, un pas de déplacement dudit outil d'usinage au moins égal ou inférieur à 1µm, de préférence 0,2 µm induisant une précision de détection du contact égale ou inférieure à +/-0,5µm, de préférence +/-0,1 µm et une machine-outil dont la précision de déplacement de l'outil d'usinage est au moins égale ou inférieure à +/-0,15µm, on peut obtenir des précisions de mesure meilleures que +/-5µm, jusqu'à +/-0,5µm, dans des conditions de fonctionnement de l'outil proches de celles de l'usinage, pouvant mesurer avec la même précision n'importe quel type d'outils, notamment des outils diamant.

## Revendications

1. Machine-outil comportant un outil d'usinage (15) pour l'usinage d'une pièce à usiner et un dispositif de mesure par contact (1) d'au moins une dimension d'outil d'usinage, **caractérisée en ce que** ledit dispositif de mesure par contact (1) comprend d'une part, un élément de référence (2) recouvert d'une couche de peinture (4) qui est destinée à être enlevée localement lors d'un impact entre ledit élément de référence (2) et ledit outil d'usinage (15) et d'autre part, un détecteur optique (3) pointant une zone d'impact (5) entre ledit outil d'usinage (15) et ledit élément de référence (2), pour détecter une trace issue de l'enlèvement local de ladite couche de peinture (4).

2. Machine-outil selon la revendication 1, **caractérisée en ce que** ladite couche de peinture comporte du Bleu de Prusse ou une encre.

3. Machine-outil selon l'une des revendications 1 ou 2, **caractérisée en ce que** la forme dudit élément de référence (2) présente une précision d'usinage inférieure ou égale à +/- 2µm, de préférence +/-0,15 µm.

4. Machine-outil selon l'une des revendications 1 à 3, **caractérisée en ce que** ledit élément de référence (2) comporte une pige de référence cylindrique.

5. Machine-outil selon l'une des revendications 1 à 4, **caractérisée en ce que** ledit dispositif de mesure (1) comporte un support (6) sur lequel ledit élément de référence (2) est fixé par collage, ledit support (6) présentant des moyens de fixation pour fixer ledit élément de référence (2) sur une table (16) de ladite machine-outil.

6. Machine-outil selon la revendication 5, **caractérisée en ce que** ledit support (6) présente une encoche de soutien (9) de forme complémentaire audit élément de référence (2).

7. Machine-outil selon l'une des revendications 5 ou 6, **caractérisée en ce que** ledit support (6) présente une cavité interne (10) telle qu'oblongue et/ou traversante.

8. Machine-outil selon l'une des revendications 1 à 7, **caractérisée en ce que** ledit détecteur optique (3) comporte un microscope présentant des moyens de grossissement d'au moins x50.

9. Machine-outil selon l'une des revendications 1 à 8, **caractérisée en ce que** ledit détecteur optique (3) est numérique.

10. Machine-outil selon l'une des revendications 1 à 9, **caractérisée en ce que** ledit dispositif de mesure (1) comporte un bras de support articulé (12) à l'extrémité (13) duquel est fixé ledit détecteur optique (3), ledit bras de support articulé (12) étant apte à pivoter autour dudit élément de référence (2).

11. Machine-outil selon la revendication 10, **caractérisée en ce que** ledit bras de support articulé (12) est monté dans un chariot dudit dispositif de mesure (1), ledit chariot étant apte à se déplacer le long dudit élément de référence (2).

12. Machine-outil selon l'une des revendications 1 à 9, **caractérisée en ce que** ledit détecteur optique (3) est monté dans un support de broche de ladite machine-outil.

13. Procédé de mesure par contact d'au moins une dimension d'un outil d'usinage monté dans une broche d'une machine-outil selon l'une des revendications 1 à 12, **caractérisé en ce que** :
- ledit détecteur optique vise ladite couche de peinture dans une zone d'impact entre ledit outil d'usinage et ledit élément de référence (101),
- on incrémente le déplacement dudit outil d'usinage pas à pas en direction dudit élément de référence dans ladite zone d'impact (102),
- après la progression de chaque pas, on dégage ledit outil d'usinage et on observe ladite couche de peinture (103), une mesure dimensionnelle dudit outil d'usinage étant déduite du nombre de pas parcourus par ledit outil d'usinage lorsqu'une trace issue de l'enlèvement local de ladite couche de peinture est détectée par ledit détecteur optique.

14. Procédé de mesure selon la revendication 13, **caractérisé en ce que** ledit pas de déplacement dudit outil d'usinage est inférieur ou égal à 1 µm, de préférence 0,2 µm.

15. Procédé de mesure selon l'une des revendications 13 ou 14, **caractérisé en ce qu'**on mesure une dimension dudit outil d'usinage par un mesureur de ladite machine-outil pour pré-positionner ledit outil d'usinage.

16. Procédé de mesure selon l'une des revendications 13 à 15, pour une machine-outil selon l'une des revendications 10 à ou 12, prise ensemble avec la revendication 4, **caractérisé en ce qu'**on dirige ledit outil d'usinage normalement à la circonférence de ladite pige de référence séquentiellement selon un angle d'incrémentation, pour déterminer un profil partiel dudit outil d'usinage, ledit détecteur optique pivotant autour d'un axe longitudinal de ladite pige de référence pour suivre la zone d'impact entre ledit outil d'usinage et ladite pige de référence.

17. Procédé de compensation mettant en oeuvre le procédé de mesure selon la revendication 16, **caractérisé en ce qu'**après avoir déterminé ledit profil partiel d'outil d'usinage (201), on détermine un contour continu d'outil d'usinage correspondant par un calcul d'extrapolation (202) et on utilise ledit contour continu extrapolé pour corriger le déplacement de l'outil d'usinage (203).
